# EUROPEAN PATENT SPECIFICATION

(11) **EP 2 330 475 B1**
(45) Date of publication and mention of the grant of the patent: **18.09.2013**
(21) Application number: 09425492.7
(22) Date of filing: 30.11.2009
(51) Int. Cl.: G05D 16/10, G05D 7/01

(54) **Pressure reduction device for a gas cylinder**
Druckmindervorrichtung für Gaszylinder
Dispositif de réduction de pression pour bouteille de gaz comprimé

(43) Date of publication of application: 08.06.2011
(73) Proprietor: Flow Meter S.p.a., 24040 Levate (Bergamo) (IT)
(72) Inventor: Paratico, Roberto, 24040 Levate (Bergamo) (IT)
(74) Representative: Botti, Mario

(56) References cited:
- EP-A1- 1 585 003
- US-A- 2 911 008
- US-A- 3 967 811
- US-A- 4 655 246
- US-A- 5 678 602
- US-A1- 2004 182 456

## Description

### Field of application

The present invention relates to a pressure reduction device having an improved structure and intended for gas cylinders.

More particularly, the device according to the invention is of the type comprising a valve body intended to be associated with the gas cylinder, a gas path extending in the valve body between a high pressure gas inlet mouth and a low pressure gas outlet mouth, as well as gas shut-off means comprising at least one pressure reduction valve and a flow rate regulation valve positioned along the path of the gas.

Preferably but not exclusively the device according to the invention can be applied to gas cylinders for medical use, for example for the supply of oxygen for respiratory treatments.

### Prior art

In this specific technical field there is a known need for the availability of pressure reduction devices of the type specified above, mounted at the mouth of a gas cylinder and which allow the gas to be supplied selectively by the cylinder by opening/closure of a shut-off valve, in addition to ensuring the tight closure of this shut-off valve, also in the case of high pressure of the gas in input.

A device of this type with shut-off valve of the type mentioned is known for example from patent EP 1 585 003 of the same Applicant. A device having a similar purpose but provided with a single reduction stage is known from patent US 5,678,602 .

In general known devices provide for the opening and the closure of the supply by rotation of a knob directly connected to a shutting member which has an axial movement in relation to the path of the gas.

Pressure reduction devices exist that are suitable for being associated co-axially with the gas cylinder and which provide for the use of a shut-off valve which is axially mobile in relation to the main axis of the device.

More particularly these known devices provide a valve body divided into a first block, which comprises a pressure reduction valve and a flow rate regulation valve, and into a second block which comprises the gas shut-off valve.

A rotatable tubular knob, coaxially associated with the valve body, is provided with a cam profile to co-operate with a corresponding profile formed in the first block of the valve body. In order to open/close the shut-off valve the knob is rotated around its own axis so as to move the first block axially via the cam profile. The first block moves in turn the shut-off valve axially by means of a rod, causing the opening or the closure thereof.

Other pressure reduction devices are however known, which, like those described previously, comprise a rotatable tubular knob, coaxial to the valve body, for the control of the shut-off valve. In this case, however, the shut-off valve comprises a slide, which is positioned in a housing formed in the valve body and can be moved transversely in relation to the axis of the valve body. The ends of the slide project from the valve body and co-operate with curved guide surfaces formed on the internal wall of the tubular knob.

In these latter devices with a rotation of the tubular knob a transverse displacement of the slide is obtained and therefore the opening/closure of the shut-off valve.

The known pressure reduction devices, although allowing the gas to be supplied selectively and ensuring the tightness of the gas when the shut-off valve is closed, have however the disadvantage that the entire actuation mechanism for opening/closing this valve is rather multipart and complex and requires specific precision mechanical engineering for the manufacture of the single components with minimum admitted tolerances and inevitable high costs to be sustained for any replacements or repairs of components.

Moreover, since the knob of the pressure reducer undergoes multiple manipulations, leaks and seepage of fluid towards the exterior may occur in time which can also be very hazardous in relation to the type of gas stored in the cylinder.

The technical problem at the basis of the present invention is therefore that of realizing a pressure reduction device for a gas cylinder which comprises a shut-off valve which, in addition to allowing selective supply of the gas from the cylinder, allows the disadvantages suffered previously to be overcome and by means of components of simple manufacture which do not necessarily require mechanical machining of extreme precision but which are instead particularly reliable and durable in time thanks to their structure and co-operation of parts.

### Summary of the invention

The technical problem is solved by a pressure reduction device of the type specified above and comprising the features of independent claim 1.

Advantageously the reducer body and flow meter body stages are cylindrical and with the same diameter and are joined coaxially to form an elongated, cylindrical and monolithic valve body with said outlet mouths extending radially.

Moreover the valve of the flow meter body stage has a shutting member with calibrated orifices and is controlled directly by the rotation of said knob.

The flow meter body has an exposed surface provided with a graduated scale or numbered notches turned towards the knob in order to facilitate regulation by the user.

Finally a circular window is provided in the knob for visual access to one of the numbered notches formed on the exposed surface of the flow meter body.

It should also be noted that in the second reducer body stage a pre-calibrated safety valve is additionally provided which however is pneumatically connected to the first stage.

Additional features and advantages of the pressure reducer device according to the invention will be made clearer by the description given herein below of an embodiment, given by way of a non-limiting example with reference to the accompanying drawings.

### Brief description of the drawings

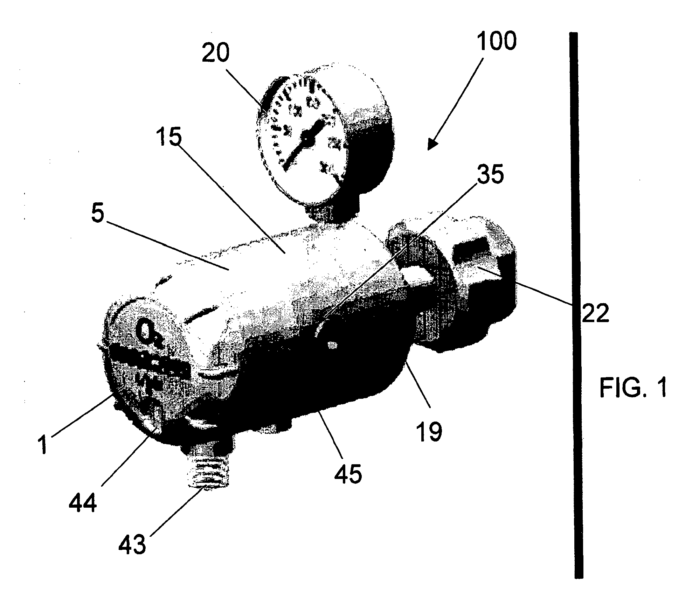

Figure 1 illustrates a perspective view of a pressure reduction device according to the invention.
Figure 2 shows a perspective and schematic view, with detached parts, of the device of Figure 1.

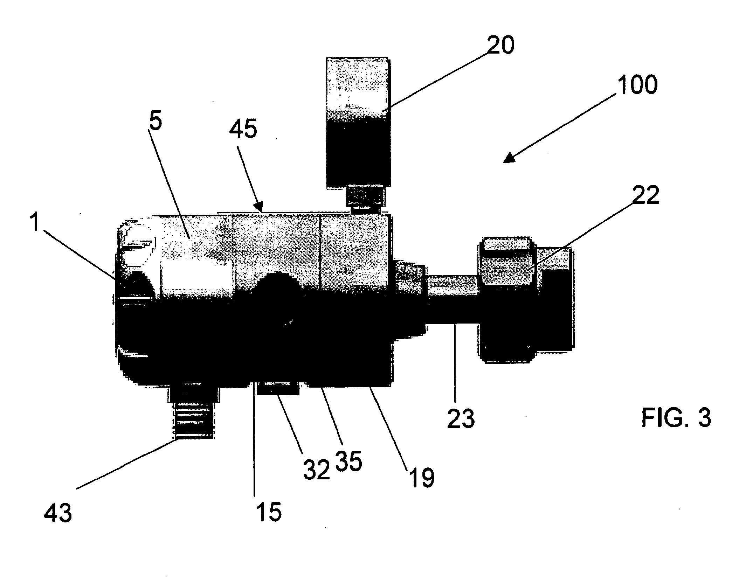

Figure 3 is a lateral view of the device of Figure 1.

### Detailed description

Referring to the accompanying drawings, reference numeral 100 denotes a pressure reduction device for a pressurised gas cylinder, preferably but not exclusively a gas cylinder for medical use, for example oxygen.

The cylinder is not illustrated in the drawings being of conventional ype. The only indication in relation thereto is that the pressure of the gas in the cylinder can reach values of 200 bar.

The device 100 is joined to the mouth of the cylinder by means of an elbow union 23 having a threaded end for the connection to an inlet mouth 40 of the device 100 and opposite end provided with an abutment edge 48 for a nut 22 housed on the union 23 and intended for manual attachment to the mouth of the cylinder.

Between the nut 22 and the mouth of the cylinder there is a seal ring 26 and a mesh filter 24, preferably in bronze.

The device 100 is formed substantially by three stages associated coaxially one with the other along a reference axis X to form a valve body 45 intended to be associated with the gas cylinder in such a way that the axis X is perpendicular to the axis of the cylinder.

The valve body 45 of the device 100 is monolithic and comprises a first reducer body 19 of first stage, a second reducer body 15 of second stage and a third body 5 which we will define as flow meter body.

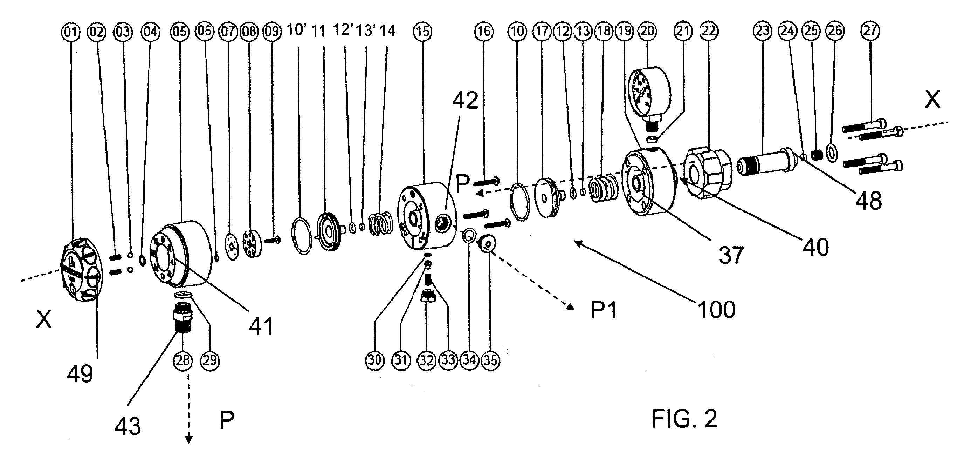

In the solution illustrated in Figure 2 by way of a non-limiting example the bodies 19, 15 and 5 are cylindrical in shape and of the same diameter so that their whole forms a single elongated and cylindrical valve body 45.

The first reducer body 19 is made integral with the second reducer body 15 by means of screws 27 passing through holes 37 in the first reducer body 19.

The first reducer body 19 is also a support for a pressure gauge 20 connected to the body 19 by means of a washer 21 and designed for visual control by the user of the pressure level of the gas contained in the cylinder.

The device 100 also comprises a gas path P, indicated with a dotted line in Figure 2, which extends in the valve body 45 between an inlet mouth 40 of the gas at high pressure and an outlet mouth 43 of the gas at low pressure.

More particularly the gas inlet mouth 40 is formed in the first reducer body 19, while the gas outlet mouth 43 is the end of an outlet union 28 connected tightly and laterally to the flow meter body 5 by means of a seal ring 29.

The device 100 according to the invention comprises at least three valves positioned along the gas path P, two pressure regulation valves and a flow rate regulation valve.

A first valve is a gas pressure reduction valve, housed in the first stage reducer body 19 wherein the pressure is reduced for example from the high pressure of 200 bar to the average pressure of approximately 4 bar, i.e. to the working pressure of the systems for distribution of medical gases.

This first reduction valve comprises a shutting member 13 with piston 17 actuated in opposition to a spring 18 and provided peripherally with a seal ring 12. Between the base of the piston 17 and the reducer body 15 adjacent to the first stage reducer body 19 there is an additional seal ring 10.

Preferably, but not exclusively, the device 100 comprises moreover a second gas pressure reduction valve, housed in the second stage reducer body 15.

This second reduction valve comprises a shutting member 13' with piston 11 actuated in opposition to a spring 14 and provided peripherally with a seal ring 12'. Between the base of the piston 11 and the flow meter body 5 adjacent to the second stage reducer body 15 there is an additional seal ring 10'.

The second reduction valve causes a reduction in the average pressure from approximately 4 bar to a final low pressure of approximately 2.1 bar and therefore allows an additional reduction in the pressure of the gas necessary for guaranteeing a constant pressure value on the calibrated orifices of the successive flow rate regulation valve and, consequently, a constant and accurate value of the flow supplied, irrespective of the value of pressure of the gas contained in the cylinder.

Advantageously, to the side of the second stage reducer body 15 an aperture 42 is provided, closed by a plug 35 with a relative seal ring 34. This aperture 42 is associated with a quick coupling socket, for example a socket of the AFNOR standard type, for the connection of a medical device typically, for example, an emergency pulmonary ventilator. Figure 2 shows with an arrow P1 the direction of supply of this pressure-regulated gas flow.

Therefore with the device 100 of the present invention a low pressure attachment is made available which can feed a terminal unit laterally or radially to the device 100 by means of an AFNOR socket or the like. This is in a manner wholly independent of the other low pressure outlet yet with flow rate that can be regulated via a flow meter.

A safety valve is additionally provided in the second stage of the valve body 45, yet connected pneumatically to the first stage, that is to say in the second reducer body 15. The safety valve comprises a valve body 32, a shutting member 31, a spring 33 and a washer 30, preferably a silicone washer. The safety valve is situated radially in the second reducer body 15 at approximately 90° in relation to the outlet mouth 42 closed by the plug 35.

The third gas flow rate regulation valve is housed between the second valve and the fluid outlet 43. Downstream of this third valve the flow of gas is regulated in terms of pressure and flow rate.

The first and the second gas pressure reduction valve and the gas flow rate regulation valve are therefore integrated one with the other in the interior of the valve body 45.

The device 100 also comprises a regulation knob 1, which is arranged substantially coaxial to the valve body 45 and can be angularly displaced around the axis X in the manner of a circular selector. More particularly the knob 1 is mounted at the free end of the device 100 as integration of the flow meter body 5 and has a shape similar to a flattened spherical cap. The function of the knob 1 is described with greater detail herein below in the description.

According to the present invention the flow meter body 5 has an end or exposed surface 41 with a graduated scale or with numbered notches turned towards the knob 1. A self-tapping screw 9 traverses the flow meter body 5 in correlation with the axis X and fixes the knob 1 at the back of the surface 41.

Between the knob 1 and the surface 41 of the flow meter body 5 there are two balancing springs 2 which act on two corresponding ball bearings 3 housed in corresponding seats in the surface 41 of the flow meter body 5.

A seal ring gasket 4 is also placed between the knob 1 and the surface 41 of the flow meter body 5. The gasket is housed in a relative seat around the hole of passage of the screw 9.

The knob 1 is thus rotatable around the axis X with a particularly gentle and regular movement, but is sealed against potential seepage of fluid through the hole of passage of the screw 9.

On the internal side of the flow meter body 5 there is a plate 7 with calibrated orifices supported by a corresponding support disk 8.

The orifices are calibrated for example to enable the passage at most of a flow of gas of 14 litres per minute. More particularly the orifices can be dimensioned as required, with flow rate intervals defined by the manufacturer. The maximum flow foreseen is 30 litres/min.

The screw 9 fixes one with the other the disk 8 and the plate 7 with the knob 1 in such a way that an angular rotation of the knob coincides with a similar rotation of the disk 8 and of the plate 7.

An additional seal ring gasket 6 is placed between the plate 7 and the flow meter body 5 on the opposite side in relation to the surface 41, always around the hole of passage of the screw 9.

The plate 7 is substantially a shutting member with calibrated orifices which shuts the opening of section of path of fluid extending in an L shape in the flow meter body 5 and which places in communication the internal chamber of the body 5 with the outlet mouth 43.

A circular window 44 formed in the knob 1 allows the user to see one of the numbered notches formed on the graduated surface 41 of the flow meter body 5. A given notch corresponds to a specific angular position of the plate with calibrated orifices.

The knob 1 can be compared to a rotary tap having an element or screw tap rotating around the axis X, which can be displaced angularly to open/close selectively the path P of the flow of gas.

According to another feature of the present invention the knob 1 has a plurality of raised perimetral notches 49 which facilitate the action of manual regulation of the user.

Shutting-off of the gas in the device 100 according to the invention is performed in the following manner.

By manoeuvring with rotation in one direction, for example clockwise, the knob 1, it acts on the plate with calibrated orifices bringing it selectively from a closure position, wherein there are no orifices open on the path P of the flow of gas, to a position of opening, wherein an increasing number of orifices is positioned on the path P of the flow of gas.

It should be noted that, in the position of closure, the seal ring gaskets 4 and 6 prevent leaks of the gas from the valve body 45, while in the position of opening the ring 6 ensures in any case that the passage of the flow of gas takes place in the direction of the outlet mouth 43.

The main advantage of the present invention lies in the fact that a pressure reduction device for a gas cylinder is obtained, wherein from the outlet mouths a flow of gas with regulated pressure and an independent flow of gas with regulated flow rate can be obtained simultaneously.

The gas shut-off valves inside the device 100 are of simple manufacture and comprise mechanical elements which are easy to find commercially and which do not require precision engineering.

Another advantage of the device according to the invention lies in the fact that all the elements that make up the front regulation knob of the flow meter body can easily be replaced in the case of wear or of breakage.

Another advantage of the present invention consists in the fact of being suitable for direct mounting on the cylinder thanks to a particularly compact and lightweight structure with integrated the flow meter with calibrated orifices and the quick coupling socket for connection to a terminal unit.

The devices made in this way are particularly suitable for oxygen therapy and are made with an inlet union adapted to the various gases and to the different reference standards of the destination countries. The outlet mouths 42, 43 also have adequate threading for the different applications.

Calibration of the pressures of the single stages can be rendered fixed, with single control pressure gauge, to display the content of the cylinder. The safety valve can be pre-calibrated.

Finally the device of the present invention has a structure of small dimensions and its particular compact configuration allows the possibility of supplying with extreme accuracy flows of medical gases even in the most critical conditions, such as for example in mobile emergency units.

## Claims

1. Pressure reduction device (100) for a gas cylinder, of the type comprising a valve body (45) intended to be associated with the gas cylinder, a gas path (P) extending in the valve body between a high pressure gas inlet mouth (40) and a low pressure gas outlet mouth (42), as well as gas shut-off means (19, 15, 5) comprising at least a first pressure reduction valve and a flow rate regulation valve, comprising a plate (7) with calibrated orifices supported by a corresponding support disk (8), positioned along the gas path (P), said pressure reduction device (100) comprising:
- a first reducer body stage (19) provided with the first pressure reduction valve (13, 17) and comprising said inlet mouth (40);
- a second reducer body stage (15) provided in turn with a second pressure reduction valve (13', 11) and connected downstream of the preceding body (19) to said outlet mouth (42) extending transversely to the gas path (P);
- an additional flow meter body terminal stage (5) provided with the flow rate regulation valve and an additional outlet mouth (43); said additional terminal stage comprising a knob (1) for regulation of the rate of the flow of gas exiting from said additional outlet mouth (43);
- a seal gasket (4) being provided to avoid seepage of fluid from the gas path (P);
**characterized in that** said seal gasket (4) is arranged between said knob (1) and an end surface (41) of said flow meter body terminal stage (5); said pressure reduction device (100) further comprising an additional sealing gasket (6) placed between the plate (7) and the flow meter body terminal stage (5) on the opposite side in relation to the surface (41).

2. Device according to claim 1, **characterised in that** said reducer body (19, 15) and flow meter body (5) stages are cylindrical and have the same diameter and are joined coaxially to form an elongated, cylindrical and monolithic valve body (45) with said outlet mouths (42, 43) extending radially.

3. Device according to claim 1, **characterised in that** in said flow meter body stage (5) said valve has a shutting member (7) with calibrated orifices and is controlled directly by the rotation of said knob (1).

4. Device according to claim 1, **characterised in that** the end surface (41) is provided with a graduated scale or numbered notches turned towards said knob (1).

5. Device according to claim 4, **characterised in that** in the knob (1) a circular window (44) is provided for visual access to one of the numbered notches formed on the exposed surface (41) of the flow meter body (5).

6. Device according to claim 1, **characterised in that** in said second reducer body stage (15) a pre-calibrated safety valve is additionally provided, pneumatically connected to the first stage.

7. Device according to claim 6, **characterised in that** said safety valve is situated perimetrally to the body (15) at 90° in relation to said outlet mouth (42),

8. Device according to claim 1, **characterised in that** said knob (1) has a plurality of raised perimetral notches (49) which facilitate the action of manual regulation of the user.

9. Device according to claim 1, **characterised in that** said first outlet mouth (42) is associated with a quick coupling connection socket for a terminal unit of a medical device.

10. Device according to claim 1, **characterised in that** a pressure gauge (20) for visual control of the pressure in the cylinder is connected to said first stage.

## Patentansprüche

1. Druckreduziervorrichtung (100) für eine Gasflasche von der Art, umfassend einen Ventilkörper (45), der zum Verbinden mit der Gasflasche ausgebildet ist, einen Gasweg (P), der sich in dem Ventilkörper zwischen einer Hochdruckgaseinlassöffnung (40) und einer Niederdruckgasauslassöffnung (42) erstreckt, sowie Gassperrmittel (19, 15, 5), die wenigstens ein erstes Druckreduzierventil und ein Fließratenregulierventil umfassen, das eine Platte (7) mit kalibrierten Öffnungen, die von einer entsprechenden Trägerscheibe (8) getragen wird, umfasst, welche entlang des Gasweges (P) angeordnet sind, wobei die Druckreduziervorrichtung umfasst:
• Eine erste Etage eines Druckreduzierkörpers (19), die mit dem ersten Druckreduzierventil (13, 17) versehen ist und die Gaseinlassöffnung (40) umfasst;
• Eine zweite Etage eines Druckreduzierkörpers (15), die ihrerseits mit einem zweiten Druckreduzierventil (13', 11) versehen ist und flussabwärts des vorstehenden Druckreduzierkörpers (19) mit der Gasauslassöffnung (42), die sich quer zu dem Gasweg (P) erstreckt, verbunden ist;
• Eine weitere Endetage mit einer Durchflussmessvorrichtung (5), die mit dem Fließratenregulierventil und einer weiteren Auslassöffnung (43) versehen ist, wobei die weitere Endetage einen Knopf (1) zum Regeln der Gasdurchflussrate aus der weiteren Auslassöffnung (43) umfasst;
• Einen Dichtring (4), der vorgesehen ist, um einen Gasaustritt aus dem Gasweg (P) zu verhindern;
**dadurch gekennzeichnet, dass** der Dichtring (4) zwischen dem Knopf (1) und einer Endfläche (41) der weiteren Etage mit der Durchflussmessvorrichtung (5) angeordnet ist, wobei die Druckreduziervorrichtung (100) weiterhin einen zusätzlichen Dichtring (6) aufweist, der zwischen der Platte (7) und der weiteren Endetage mit der Durchflussmessvorrichtung (5) gegenüber der Fläche (41) angeordnet ist.

2. Vorrichtung gemäß Anspruch 1, **dadurch gekennzeichnet, dass** der Reduzierkörper (19, 15) und die Etage mit der Durchflussmessvorrichtung (5) zylindrisch ausgebildet sind und den gleichen Durchmesser aufweisen und koaxial verbunden sind, so daß sie einen länglichen, zylindrischen und einstückigen Ventilkörper (45) ausbilden, von dem sich die Auslassöffnungen (42, 43) radial erstrecken.

3. Vorrichtung gemäß Anspruch 1, **dadurch gekennzeichnet, dass** in der Etage mit der Durchflussmessvorrichtung (5) das Ventil ein Schließglied (7) mit kalibrierten Öffnungen aufweist und direkt durch das Drehen des Knopfes (1) gesteuert wird.

4. Vorrichtung gemäß Anspruch 1, **dadurch gekennzeichnet, dass** die Endfläche (41) mit einer graduierten Skala oder nummerierten Vorsprüngen versehen ist, die zu dem Knopf (1) gerichtet sind.

5. Vorrichtung gemäß Anspruch 4, **dadurch gekennzeichnet, dass** in dem Knopf (1) ein kreisförmiges Fenster (44) vorgesehen ist, um eine Sichtmöglichkeit zu einem der nummerierten Vorsprünge auf der beaufschlagten Seite des Durchflußmesskörpers (5) zu schaffen.

6. Vorrichtung gemäß Anspruch 1, **dadurch gekennzeichnet, dass** in der zweiten Etage des Druckreduzierkörpers (15) zusätzlich ein vorkalibriertes Sicherheitsventil vorgesehen ist, das pneumatisch mit der ersten Etage verbunden ist.

7. Vorrichtung gemäß Anspruch 6, **dadurch gekennzeichnet, dass** das Sicherheitsventil auf dem Umfang des Körpers (15) um 90° versetzt zu der Auslassöffnung angeordnet ist.

8. Vorrichtung gemäß Anspruch 1, **dadurch gekennzeichnet, dass** der Knopf (1) eine Vielzahl von Vorsprüngen (49) in Umfangsrichtung aufweist, die das manuelle Regulieren durch den Benutzer erleichtern.

9. Vorrichtung gemäß Anspruch 1, **dadurch gekennzeichnet, dass** die erste Auslassöffnung (42) mit einem Schnellkupplungssockel für eine Endeinheit einer medizinischen Vorrichtung verbunden ist.

10. Vorrichtung gemäß Anspruch 1, **dadurch gekennzeichnet, dass** ein Gasdruckmesser (20) für die optische Kontrolle des Gasdrucks in der Gasflasche mit der ersten Etage verbunden ist.

## Revendications

1. Dispositif (100) de réduction de la pression pour une bouteille de gaz comprimé, du type comprenant un corps de valve (45) destiné à être associé à la bouteille de gaz comprimé, un trajet de gaz (P) s'étendant dans le corps de valve entre une ouverture d'entrée (40) de gaz à haute pression et une ouverture de sortie (42) de gaz à basse pression, ainsi que des moyens de fermeture (19, 15, 5) comprenant au moins une première valve de réduction de pression et un une valve de régulation du débit, comprenant une plaque (7) avec des orifices calibrés supportée par un disque support (8) correspondant, positionnés le long du trajet du gaz (P), ledit dispositif de réduction de la pression (100) comprenant :
- un premier étage de corps de réduction (19) muni de la première valve de réduction de pression (13, 17) et comprenant ladite ouverture d'entrée (40) ;
- un deuxième étage de corps de réduction (15) muni à son tour d'une seconde valve de réduction de pression (13', 11) et connecté en aval du corps précédent (19) à ladite ouverture de sortie (42) s'étendant transversalement au trajet de gaz (P) ;
- un étage de corps terminal supplémentaire de mesure du débit (5) muni de la valve de régulation du débit et d'une ouverture de sortie supplémentaire (43), lequel étage terminal supplémentaire comprenant un bouton (1) pour réguler la vitesse d'écoulement du gaz quittant ladite ouverture de sortie supplémentaire (43) ;
- un joint d'étanchéité (4) étant prévu pour éviter une fuite du gaz en provenance du trajet de gaz (P) ;
**caractérisé en ce que** ledit joint d'étanchéité (4) est placé entre ledit bouton (1) et la surface d'extrémité (41) dudit étage de corps terminal de mesure du débit (5), ledit dispositif de réduction de la pression (100) comprenant en outre un joint d'étanchéité supplémentaire (6) placé entre la plaque (7) et l'étage terminal de mesure du débit (5) du côté opposé par rapport à la surface (41).

2. Dispositif de réduction de la pression selon la revendication 1, **caractérisé en ce que** lesdits étages de corps de réduction (19, 15) et de corps de mesure du débit (5) sont cylindriques et sont de même diamètre et sont joints coaxialement pour former un corps de valve (45) allongé, cylindrique et monolithique avec lesdites ouvertures de sortie (42, 43) s'étendant radialement.

3. Dispositif selon la revendication 1, **caractérisé en ce que** dans ledit étage de corps de mesure de débit (5), ladite valve présente un élément de fermeture (7) avec des orifices calibrés et est contrôlée directement par la rotation dudit bouton (1).

4. Dispositif selon la revendication 1, **caractérisé en ce que** la surface d'extrémité (41) est munie d'une échelle graduée ou d'encoches numérotées dirigées vers ledit bouton (1).

5. Dispositif selon la revendication 4, **caractérisé en ce qu'**une fenêtre circulaire (44) est prévue dans le bouton (1) pour un accès visuel à l'une des encoches numérotées formées sur la surface exposée (41) du corps de mesure du dépit (5).

6. Dispositif selon la revendication 1, **caractérisé en ce qu'**une valve de sécurité précalibrée est prévue en outre dans ledit second étage de réduction de la pression (15), connectée par voie pneumatique au premier étage.

7. Dispositif selon la revendication 6, **caractérisé en ce que** ladite valve de sécurité est située sur le périmètre du corps (15) à 90° par rapport à ladite ouverture de sortie (42).

8. Dispositif selon la revendication 1, **caractérisé en ce que** ledit bouton (1) présente une pluralité de protubérances périphériques (49) qui facilitent l'action de la régulation manuelle par l'utilisateur.

9. Dispositif selon la revendication 1, **caractérisé en ce que** ladite première ouverture de sortie (42) est associée à une prise de connexion de raccord rapide pour une unité terminale d'un dispositif médical.

10. Dispositif selon la revendication 1, **caractérisé en ce qu'**une jauge de pression (20) est connectée audit premier étage pour un contrôle visuel de la pression régnant dans la bouteille de gaz.
